# EUROPÄISCHE PATENTANMELDUNG

(11) **EP 4 726 350 A1**
(43) Veröffentlichungstag der Anmeldung: **15.04.2026**
(21) Anmeldenummer: 25205664.3
(22) Anmeldetag: 30.09.2025
(51) Int. Cl.: G01M 13/025, G01M 13/027

(54) **ANTRIEBSEINHEIT FÜR EINEN PRÜFSTAND ZUM PRÜFEN EINES ELEKTRISCHEN ACHSANTRIEBSMODULS FÜR EIN KRAFTFAHRZEUG UND PRÜFSTAND**

(30) Priorität: 10.10.2024 DE 102024209884
(71) Anmelder: ZF Friedrichshafen AG, 88046 Friedrichshafen (DE)
(72) Erfinder: Hell, Christian, 94107 Untergriesbach (DE); Juse, Matthias, 4784 Schardenberg (AT)
(74) Vertreter: ZF Friedrichshafen AG

(57) **Zusammenfassung**

Die Erfindung betrifft eine Antriebseinheit (100) für einen Prüfstand (220) zum Prüfen eines elektrischen Achsantriebsmoduls (240) für ein Kraftfahrzeug, umfassend einen elektrischen Antriebsmotor (110) und ein Gestell (130), wobei der Antriebsmotor (110) vom Gestell (130) radial eingehaust ist und im Gestell (130) so gehalten ist, dass er eine Eingangswelle (241) eines Achsantriebsmoduls (240) antreiben kann. Die erfindungsgemäße Antriebseinheit (100) zeichnet sich dadurch aus, dass das Gestell (130) mindestens eine Öffnung (140) aufweist, welche dazu ausgebildet ist, eine Abtriebswelle (242, 243) des Achsantriebsmoduls (240) parallel zum Antriebsmotor (110) durch das Gestell (130) zu führen. Die Erfindung betrifft weiterhin einen entsprechenden Prüfstand.

## Beschreibung

Die Erfindung betrifft eine Antriebseinheit für einen Prüfstand zum Prüfen eines elektrischen Achsantriebsmoduls für ein Kraftfahrzeug gemäß dem Oberbegriff von Anspruch 1 sowie einen entsprechenden Prüfstand.

Getriebeprüfstände bzw. Antriebsstrangprüfstände zum Prüfen von Kraftfahrzeuggetrieben bzw. von vollständigen Kraftfahrzeugantriebssträngen sind im Stand der Technik grundsätzlich bekannt. Derartige Prüfstände werden üblicherweise zur Qualitätskontrolle verwendet, um Funktionsstörungen in Antriebssträngen frühzeitig durch eine Reihe von Belastungstests zu erkennen. Typische Funktionsstörungen entstehen z.B. durch spielbehaftete Bauteile, wie insbesondere Zahnräder, Synchronringe, Synchronkörper, Lamellenkupplungsscheiben bzw. Wellen, die ausgelenkt und zu Schwingungen angeregt werden können. Im Rahmen einer derartigen Qualitätskontrolle werden in der Regel auch das Akustikverhalten und die Schaltqualität geprüft. Darüber hinaus finden derartige Prüfstände aber auch in der Entwicklung und stetigen Verbesserung von Kraftfahrzeugantriebssträngen Verwendung.

Eine besondere Herausforderung stellen in diesem Zusammenhang elektrisch angetriebene Achsmodule dar, da diese aufgrund ihrer Bauform einen in der Regel nur geringen Radialabstand zwischen einer Getriebeeingangswelle und einer Getriebeausgangswelle aufweisen und eine Kopplungsfähigkeit der beiden Wellen mit einem Prüfstand, in der Regel einem sog. Mehrmaschinenprüfstand, daher erschwert ist. Hinzu kommt, dass derartige elektrische Achsmodule typischerweise vergleichsweise hohe Eingangsdrehzahlen erfordern, was entsprechend hohe Anforderungen an die Schwingungsdämpfungseigenschaften und Steifigkeit des Prüfstands stellt.

Aus der DE 10 2022 202 300 A1 ist in diesem Zusammenhang ein Prüfstand für einen Antriebsstrang eines Kraftfahrzeugs bekannt, umfassend einen ersten Belastungsmotor, einen zweiten Belastungsmotor und ein Grundgestell mit einer Prüflingsaufnahme. Der Prüfstand umfasst weiterhin eine erste Motoraufnahme zur Aufnahme des ersten Belastungsmotors und eine zweite Motoraufnahme zur Aufnahme des zweiten Belastungsmotors, wobei eine erste Motorwelle des ersten Belastungsmotors und eine zweite Motorwelle des zweiten Belastungsmotors mit Wellen des Prüflings verbindbar sind, so dass die Abtriebswellen des Prüflings mit Drehmomenten und Drehzahlen beaufschlagbar sind.

Aus der DE 10 2022 202 301 A1 ist ebenfalls ein Prüfstand für einen Antriebsstrang eines Kraftfahrzeugs bekannt, umfassend mindestens einen elektrischen Belastungsmotor und ein Tragegestell, wobei der mindestens eine elektrische Belastungsmotor mit einer axialen Stirnseite an einer Motoraufnahme des Tragegestells angeordnet ist. Die Motoraufnahme ist zur Justage einer Position des mindestens einen elektrischen Belastungsmotors vertikal und horizontal verstellbar.

Die noch unveröffentlichte DE 10 2024 202 155.5 der Anmelderin zeigt eine Antriebseinheit für einen Prüfstand zum Prüfen eines elektrischen Achsantriebsmoduls für ein Kraftfahrzeug, insbesondere für einen LKW, umfassend einen elektrischen Antriebsmotor und ein dem Antriebsmotor trieblich nachgeschaltetes Getriebe mit einer Eingangswelle und einer Abtriebswelle. Das Getriebe ist derart ausgebildet, dass es zwischen der Eingangswelle und der Abtriebswelle einen radialen Versatz bereitstellt, der größer als der halbe Durchmesser des Antriebsmotors ist. Dadurch kann die Ausgangswelle des Getriebes mit einer Eingangswelle des Achsantriebsmoduls gekoppelt werden. Zudem ist das nachgeschaltete Getriebe um die Eingangswelle schwenkbar, was die Positionierung der Antriebseinheit zum Achsantriebsmodul vereinfacht.

Die bekannten Kraftfahrzeugprüfstände sind jedoch dahingehend nachteilig, als dass sie eine Prüfung eines elektrischen Achsantriebsmoduls aufgrund der dicht beieinander liegenden Wellen sowie der hohen Drehzahlen entweder nur dann erlauben, wenn das Achsantriebsmodul von seinem eigenen, zum Achsantriebsmodul gehörenden Elektromotor angetrieben wird, oder wenn ein spezielles Getriebe - wie beispielsweise gemäß der DE 10 2024 202 155.5 - verwendet wird, welches einen radialen Versatz bereitstellt. Derartige Getriebe sind jedoch vergleichsweise teuer, ermöglichen keine präzise Erfassung des Drehmoments, mit welchem der Prüfling beaufschlagt wird, und eignen sich kaum zur Prüfung von elektrischen Achsantriebsmodulen für PKW.

Es ist eine Aufgabe der vorliegenden Erfindung, eine verbesserte Antriebseinheit für einen Prüfstand zum Prüfen eines elektrischen Achsantriebsmoduls für ein Kraftfahrzeug vorzuschlagen.

Diese Aufgabe wird erfindungsgemäß durch die Antriebseinheit für einen Prüfstand zum Prüfen eines elektrischen Achsantriebsmoduls für ein Kraftfahrzeug gemäß Anspruch 1 gelöst. Vorteilhafte Ausgestaltungen ergeben sich aus den Unteransprüchen.

Die Erfindung betrifft eine Antriebseinheit für einen Prüfstand zum Prüfen eines elektrischen Achsantriebsmoduls für ein Kraftfahrzeug, umfassend einen elektrischen Antriebsmotor und ein Gestell, wobei der Antriebsmotor vom Gestell radial eingehaust ist und im Gestell so gehalten ist, dass er eine Eingangswelle eines Achsantriebsmoduls antreiben kann.

Die Erfindung beschreibt also eine Antriebseinheit, die dazu ausgebildet ist, ein elektrisches Achsantriebsmodul für einen Prüfvorgang auf einem Prüfstand anzutreiben. Die erfindungsgemäße Antriebseinheit ist bevorzugt ein Bestandteil des Prüfstands. Der Prüfstand ist entsprechend als Antriebsstrangprüfstand ausgebildet und dazu geeignet, das elektrisches Achsantriebsmodul zu prüfen, bevor der zu seinem Antrieb erforderliche Elektromotor an diesem montiert wird.

Das elektrische Achsantriebsmodul ist dazu vorgesehen und geeignet, ein Kraftfahrzeug anzutreiben, insbesondere einen PKW anzutreiben.

Das elektrische Achsantriebsmodul umfasst - wenn es vollständig montiert ist - in der Regel einen Elektromotor, ein Getriebe, ein Differential sowie zwei Abtriebswellen, welche im Betrieb des Achsmoduls die Radwellen des Kraftfahrzeugs darstellen. Aufgrund ihres vorgesehenen Verwendungszwecks zum Antrieb von Fahrzeugen und insbesondere zur Montage in Fahrzeugen im Bereich von deren Hinterachse sind sie typischerweise vergleichsweise kompakt ausgebildet, so dass eine Eingangswelle des Getriebes des Achsantriebsmoduls nur einen sehr geringen radialen Abstand zu den Abtriebswellen des Getriebes des Achsantriebsmoduls aufweist.

Alternativ können die beschriebenen Achsantriebsmodule auch in Fahrzeugen im Bereich von deren Vorderachse montiert werden, was jedoch nicht zu einer wesentlich anderen Ausbildung der Achsantriebsmodule führt.

Vielmehr liegen sowohl im Bereich der Hinterachse als auch im Bereich der Vorderachse sehr ähnliche bis identische Voraussetzungen vor, da in beiden Fällen die Achsantriebsmodule kompakt ausgebildet sind müssen. Dies gelingt insbesondere auch durch das Verwenden von schnelldrehenden und damit kompaktbauenden Elektromotoren, welche zur Drehzahluntersetzung wiederum auf eine Übersetzungsstufe mit zumindest einem vergleichsweise kleinen Zahnrad angewiesen sind, so dass der radiale Achsabstand zwischen der Eingangswelle des Getriebes des Achsantriebsmoduls zu den Abtriebswellen des Getriebes zwangsläufig - wie beschrieben - gering ist.

Die erfindungsgemäße Antriebseinheit ist daher aufgrund ihrer Ausbildung und insbesondere Konstruktionsweise dazu geeignet, trotz der beengten Raumverhältnisse eine Triebverbindung zu einer Eingangswelle des Getriebes des Achsantriebsmoduls herzustellen.

Dazu umfasst die Antriebseinheit einen elektrischen Antriebsmotor und ein Gestell, welches dazu ausgebildet ist, den Antriebsmotor zu tragen. Das Gestell weist bevorzugt schwingungsdämpfende Eigenschaften auf bzw. ist besonders steif ausgebildet, um auch hohe Antriebsdrehzahlen des Antriebsmotors bis zu 30000 U/min und mehr zu ermöglichen. Dementsprechend liegt eine Eigenfrequenz der Antriebseinheit vorzugsweise bei mindestens 500 Hz.

Der elektrische Antriebsmotor ist vorteilhaft als Elektromotor ausgebildet. Elektromotoren sind vergleichsweise kompaktbauend, haben insbesondere im Vergleich zu Verbrennungsmotoren ein breites Drehzahlspektrum und weisen vorteilhaft über einen weiten Drehzahlbereich ihr maximales Drehmoment auf.

Vorteilhaft weist der Antriebsmotor ein Motorgehäuse auf, welches den Antriebsmotor einfasst und insbesondere radial begrenzt.

Das Gestell haust den Antriebsmotor radial ein und hat bevorzugt mindestens mit den Lagerschilden des Antriebsmotors flächigen Kontakt. Dadurch können Schwingungen des Antriebsmotors, die bevorzugt an den Lagerschilden auftreten, gezielt und effektiv gedämpft werden.

Vorteilhaft weist das Gestell gegossene Aufnahmen für die Lagerschilde des Antriebsmotors auf, welche die Lagerschilde radial einfassen und abstützen. Beispielsweise kann der Antriebsmotor eine konische Außenform aufweisen, insbesondere auch im Bereich der Lagerschilde, und die Aufnahmen können präzise an diese konische Form des Antriebsmotors angepasst sein.

Eine Motorwelle des Antriebsmotors kann axial so lang ausgebildet sein, dass sie aus dem Gestell ausreichend weit herausragt, um trieblich mit der Eingangswelle des Achsantriebsmoduls gekoppelt zu werden, so dass der Antriebsmotor das Achsantriebsmodul antreiben kann.

Alternativ bevorzugt kann die Motorwelle des Antriebsmotors mit einer Zwischenwelle gekoppelt werden, die insbesondere ebenfalls im Gestell schwingungsdämpfend und steif gelagert sein kann. In diesem Fall kann die Eingangswelle des Achsantriebsmoduls über die Zwischenwelle mit der Motorwelle des Antriebsmotors gekoppelt werden.

Es ist im Sinne der Erfindung somit nicht erforderlich, dass die Motorwelle des Antriebsmotors unmittelbar mit der Eingangswelle des Achsantriebsmoduls gekoppelt wird. Vielmehr kann die Kopplung auch über eine Zwischenwelle erfolgen. Eine Kopplung über eine Zahnradstufe ist erfindungsgemäß jedoch nicht vorgesehen.

Die Kopplung der Motorwelle mit der Eingangswelle bzw. mit der Zwischenwelle sowie die Kopplung der Zwischenwelle mit der Eingangswelle erfolgen bevorzugt jeweils über einen Flansch.

Bevorzugt ist es vorgesehen, dass die Motorwelle bzw. die Zwischenwelle ein Ausgleichselement aufweist, wobei das Ausgleichselement zur Kopplung mit der Eingangswelle des Achsantriebsmoduls ausgebildet ist.

Das Ausgleichselement dient vor allem dazu, einen geringfügigen Achsversatz zwischen der Motorwelle bzw. der Zwischenwelle und der Eingangswelle des Achsantriebsmoduls auszugleichen.

Das Ausgleichselement kann beispielsweise als Versatz-Kupplung ausgebildet sein.

Der Antriebsmotor ist bevorzugt dazu ausgebildet, Drehzahlen von 30000 U/min und mehr bereitzustellen.

Insbesondere ist der Antriebsmotor dazu ausgebildet, Drehzahlen von 20000 U/min, 25000 U/min, 30000 U/min, 35000 U/min und 40000 U/min bereitzustellen.

Erfindungsgemäß ist es nun vorgesehen, dass das Gestell mindestens eine Öffnung aufweist, welche dazu ausgebildet ist, eine Abtriebswelle des Achsantriebsmoduls parallel zum Antriebsmotor durch das Gestell zu führen.

Vorzugsweise durchragt die Öffnung das Gestell axial vollständig, d.h., sie bildet einen Durchgang von einer Vorderseite des Gestells zu einer Rückseite des Gestells.

Dadurch wird es ermöglicht, dass eine Abtriebswelle des Achsantriebsmoduls radial versetzt und parallel zum Antriebsmotor durch das Gestell geführt wird. Dies wiederum erst ermöglicht es, die erfindungsgemäße Antriebseinheit zum Antrieb des Achsantriebsmoduls zu verwenden, da andernfalls die Abtriebswelle des Achsantriebsmoduls, welche aufgrund der kompakten Bauform des Achsantriebsmoduls radial dicht neben der Eingangswelle angeordnet ist, den Zugang für eine triebliche Kopplung der Antriebseinheit mit der Eingangswelle blockieren würde.

Vorzugsweise weist das Achsantriebsmodul zwei Abtriebswellen auf, die koaxial zueinander ausgerichtet sind und auf gegenüberliegenden Seiten des Achsantriebsmoduls angeordnet sind.

Gemäß einer bevorzugten Ausführungsform der Erfindung ist es vorgesehen, dass in der mindestens einen Öffnung mindestens eine Versteifungsplatte angeordnet ist, wobei die Versteifungsplatte dazu ausgebildet ist, die Öffnung radial zu verengen und eine Steifigkeit der Antriebseinheit zu erhöhen.

Indem die mindestens eine Versteifungsplatte die Öffnung verengt, kann die Steifigkeit des Gestells und damit dessen Fähigkeit zur Schwingungsdämpfung verbessert werden. Die mindestens eine Versteifungsplatte ist vorzugsweise scheibenförmig ausgebildet und verschließt die Öffnung radial bis auf einen vorzugsweise engen Durchgang für die Abtriebswelle vollständig.

Vorzugsweise sind mindestens drei Versteifungsplatten vorgesehen, wobei jeweils eine Versteifungsplatte im Bereich der Lagerungen des Antriebsmotors angeordnet ist und eine weitere Versteifungsplatte im Bereich des Eingangs der Öffnung. Da der Bereich des hinteren Lagers des Antriebsmotors vorteilhaft mit dem Bereich des Ausgangs der Öffnung zusammenfällt, ist auch der Ausgang der Öffnung verengt.

Die mindestens eine Versteifungsplatte ist bevorzugt metallisch ausgebildet.

Gemäß einer weiteren bevorzugten Ausführungsform der Erfindung ist es vorgesehen, dass die mindestens eine Versteifungsplatte prüflingsspezifisch ausgebildet ist und austauschbar an der Antriebseinheit angeordnet ist.

Somit kann die Antriebseinheit vergleichsweise schnell und einfach an unterschiedliche, zu prüfende Achsantriebsmodule angepasst werden. Die prüflingsspezifische Ausbildung der mindestens einen Versteifungsplatte äußert sich insbesondere in der spezifischen Anordnung des Durchgangs für die Abtriebswelle des jeweiligen Achsantriebsmoduls. Unterschiedliche Achsantriebsmodule weisen üblicherweise unterschiedliche radiale Abstände der Eingangswelle zur Abtriebswelle auf. Auch der Winkel, den die Abtriebswelle gegenüber einer Horizontalen durch die Eingangswelle kann sich je nach Achsantriebsmodul unterscheiden.

Gemäß einer alternativ bevorzugten Ausführungsform der Erfindung ist es vorgesehen, dass in der mindestens einen Öffnung ein Trommelkörper angeordnet ist.

Anstelle einer oder mehrerer Versteifungsplatten kann auch ein Trommelkörper in der mindestens einen Öffnung angeordnet werden. Der Trommelkörper füllt die Öffnung dabei vorzugsweise sowohl radial als auch axial vollständig oder weitestgehend vollständig aus.

Bevorzugt weist der Trommelkörper seinerseits mindestens einen Durchgang für die Abtriebswelle auf, so dass die Abtriebswelle mittels des mindestens einen Durchgangs im Trommelkörper durch die mindestens eine Öffnung geführt werden kann.

Der mindestens eine Durchgang verengt die Öffnung für die Abtriebswelle radial.

Bevorzugt weist der Trommelkörper eine Vielzahl von Öffnungen auf, die an unterschiedliche Positionen des Trommelkörpers angeordnet sind und radial unterschiedlich große bzw. unterschiedlich geformte Durchgänge bilden.

Vorteilhaft ist der Trommelkörper zylinderförmig ausgebildet und drehbar in einer ebenfalls zylinderförmigen Öffnung angeordnet. Somit kann ein Durchgang des Trommelkörpers jeweils an eine erforderliche bzw. gewünschte Kreisposition gedreht werden.

Der Trommelkörper ist bevorzugt ebenfalls metallisch ausgebildet.

Gemäß einer besonders bevorzugten Ausführungsform der Erfindung ist es vorgesehen, dass der Prüfstand dazu ausgebildet ist, die Abtriebswelle mit einem radialen Abstand von weniger als 10 cm am Antriebsmotor vorbeizuführen.

Dadurch können auch Achsantriebsmodule geprüft werden, deren Eingangswelle radial besonders nah bei der Abtriebswelle angeordnet ist.

Gemäß einer weiteren bevorzugten Ausführungsform der Erfindung ist es vorgesehen, dass in der mindestens einen Öffnung mindestens eine Lagerung für die Abtriebswelle des Achsantriebsmoduls angeordnet ist.

Dies kann dazu beitragen, auf der Abtriebswelle des Achsantriebsmoduls bzw. auf der Motorwelle des Antriebsmotors der Abtriebseinheit auftretende Schwingungen zu dämpfen.

Gemäß einer weiteren bevorzugten Ausführungsform der Erfindung ist es vorgesehen, dass das Gestell eine Vielzahl von Öffnungen aufweist, welche jeweils dazu ausgebildet sind, eine Abtriebswelle des Achsantriebsmoduls parallel zum Antriebsmotor durch das Gestell zu führen.

Daraus ergibt sich der Vorteil, dass eine erhöhte Anzahl von Möglichkeiten und damit eine erhöhte Flexibilität geboten wird, um die Abtriebswelle des Achsantriebsmoduls durch das Gestell zu führen. Insbesondere kann somit das Prüfen von unterschiedlich ausgebildeten Achsantriebsmodulen ermöglicht werden, welche aufgrund ihrer Bauform beispielsweise unterschiedliche radiale Abstände zwischen der Eingangswelle des Achsantriebsmoduls und der Abtriebswelle des Achsantriebsmoduls aufweisen. Auch unterschiedliche Einspannpositionen bzw. Einspannausrichtungen für die Prüfung des Achsantriebsmoduls im Prüfstand werden somit ermöglicht.

Gemäß einer weiteren bevorzugten Ausführungsform der Erfindung ist es vorgesehen, dass die Antriebseinheit einen Drehmomentmessflansch aufweist.

Der Drehmomentmessflansch ist vorzugsweise vom Gestell eingehaust.

Dadurch wird es ermöglicht, das jeweils von der Antriebseinheit in das Achsantriebsmodul eingebrachte Drehmoment weitgehend präzise zu erfassen. Somit kann die tatsächliche Belastung des Achsantriebsmoduls vergleichsweise genauer bestimmt und gesteuert werden.

Bevorzugt ist es vorgesehen, dass die Motorwelle des Antriebsmotors über den Drehmomentmessflansch drehfest mit der Eingangswelle des Achsantriebsmoduls gekoppelt ist. Der Drehmomentmessflansch stellt somit ein Verbindungselement dar, über welches die gesamte Antriebsleistung übertragen wird.

Indem der Drehmomentmessflansch ebenfalls vom Gestell radial eingehaust ist und insbesondere flächig in Anlage mit dem Gestell steht, kann auch dessen Einbindung in den Antriebsstrang steif und schwingungsdämpfend erfolgen.

Bevorzugt ist es vorgesehen, dass auch eine Drehzahl des Antriebsmotors der Antriebseinheit erfasst wird, beispielsweise über dessen Ansteuerelektronik, insbesondere über dessen Inverter. Alternativ bevorzugt kann die Drehzahl des Antriebsmotors auch mittels eines Tachos direkt an der Motorwelle des Antriebsmotors gemessen werden, beispielsweise indem die Motorwelle derart verlängert ist, dass sie auf der b-Seite des Antriebsmotors ausreichend weit aus dem Motorgehäuse ragt, um den Tacho daran anzuordnen. Aus der bekannten Drehzahl und dem bekannten Drehmoment kann dann beispielsweise die mechanische Leistung, mit welcher das Achsantriebsmodul beaufschlagt wird, bestimmt werden.

Gemäß einer weiteren bevorzugten Ausführungsform der Erfindung ist es vorgesehen, dass das Gestell zumindest teilweise aus einem Mineralguss besteht.

Mineralguss bietet schon aufgrund seiner intrinsischen Materialeigenschaften eine vergleichsweise große Steifigkeit und daraus resultierend eine hohe Schwingungsdämpfungsfähigkeit.

Bevorzugt ist das Gestell derart ausgebildet, dass eine Eigenfrequenz der Antriebseinheit bei mehr als 500 Hz liegt. Durch den beschriebenen Aufbau kann dies vorteilhaft erreicht werden.

Gemäß einer weiteren bevorzugten Ausführungsform der Erfindung ist es vorgesehen, dass eine Motorwelle des Antriebsmotors mit einer Zwischenwelle gekoppelt ist, wobei die Zwischenwelle in einer Drehlagerung gehalten ist.

Sowohl die Zwischenwelle als auch die Drehlagerung sind dabei vorteilhaft innerhalb des Gestells angeordnet, insbesondere radial derart vom Gestell eingehaust, dass die Drehlagerung in Anlage mit dem Gestell ist, so dass eine effektive Schwingungsdämpfung der Drehlagerung und der Zwischenwelle ermöglicht wird.

Da die Zwischenwelle und die Drehlagerung axial gesehen zwischen dem Antriebsmotor und dem Achsantriebsmodul angeordnet sind, stellen die Zwischenwelle und die Drehlagerung zudem eine Schutzbarriere für den Antriebsmotor da, falls das Achsantriebsmodul eine Beschädigung aufweist und während des Prüfvorgangs explosionsartig Teile abstößt. Eine Beschädigung des Antriebsmotors durch derartige Teile, die sehr hohe Geschwindigkeiten aufweisen können, kann damit vermieden werden. Stattdessen kollidieren die Teile mit der Zwischenwelle und der Drehlagerung, die vergleichsweise kostengünstiger sind als der Antriebsmotor und dementsprechend leichter ersatzbar sind.

Die Erfindung betrifft weiterhin auch einen Prüfstand, umfassend eine erfindungsgemäße Antriebseinheit, eine erste Abtriebseinheit und eine zweite Abtriebseinheit sowie eine Prüflingsaufnahme, wobei die erste Abtriebseinheit einen ersten elektrischen Antriebsmotor mit einer Motorwelle umfasst, wobei die zweite Abtriebseinheit einen zweiten elektrischen Antriebsmotor mit einer Motorwelle umfasst, wobei der Prüfstand dazu ausgebildet ist, ein elektrisches Achsantriebsmodul derart in der Prüflingsaufnahme aufzunehmen, dass eine Motorwelle eines Antriebsmotors der Antriebseinheit mit einer Eingangswelle des Achsantriebsmoduls koppelbar ist, dass die Motorwelle des elektrischen Antriebsmotors der ersten Abtriebseinheit mit einer ersten Abtriebswelle des Achsantriebsmoduls koppelbar ist und dass die Motorwelle des elektrischen Antriebsmotors der zweiten Abtriebseinheit mit einer zweiten Abtriebswelle des Achsantriebsmoduls koppelbar ist.

Die erste und die zweite Abtriebseinheit weisen also jeweils einen elektrischen Antriebsmotor auf, wodurch sie ein breites Drehzahlspektrum und ein durchgehend hohes Drehmoment bereitstellen können. Über ihre Motorwellen sind sie insbesondere ohne Zwischenschaltung eines Getriebes mit jeweils einer Abtriebswelle des elektrischen Achsantriebsmoduls koppelbar.

Somit können die erste und die zweite Abtriebseinheit eine Belastung des zu prüfenden elektrischen Achsantriebsmoduls erzeugen, indem sie ein vorgebbares Drehmoment auf die Abtriebswellen des elektrischen Achsantriebsmoduls geben, welches einer Drehzahl bzw. einem Drehmoment, das die Antriebseinheit auf die Eingangswelle des elektrischen Achsantriebsmoduls gibt, entgegenwirkt.

Die Prüflingsaufnahme ist vorteilhaft längs-, seiten- und/oder höhenverstellbar ausgebildet. Indem die Prüflingsaufnahme längs-, seiten- und höhenverstellbar ausgebildet ist, kann das Achsantriebsmodul weitgehend flexibel an die Ausrichtung der Antriebseinheit sowie der zwei Abtriebseinheiten angepasst werden.

Alternativ bevorzugt ist die Prüflingsaufnahme ausschließlich durch Verwendung von Anbindungsblöcken stufenweise höhenverstellbar. Die Anbindungsblöcke sind dabei im Sinne von Unterlegelementen verwendbar und dem Prüfstand fest verbindbar, beispielsweise mittels Schrauben.

Die Prüflingsaufnahme ermöglicht eine feste Anordnung des zu prüfenden Achsantriebsmoduls auf dem Prüfstand, insbesondere verhindert sie weitgehend das Auftreten von Schwingungen während des Prüfvorgangs im Achsantriebsmodul.

Gemäß einer bevorzugten Ausführungsform der Erfindung ist es vorgesehen, dass der Prüfstand weiterhin ein Schienensystem oder ein Gussbett mit Nuten aufweist, um eine Querverstellbarkeit der Antriebseinheit zu ermöglichen und/oder um eine Längsverstellbarkeit der Antriebseinheit, der ersten Abtriebseinheit sowie der zweiten Abtriebseinheit zu ermöglichen.

Dadurch können die Antriebseinheit sowie die erste und die zweite Abtriebseinheit sehr flexibel ausgerichtet werden, um ein präzises Einspannen des Prüflings im Prüfstand zu ermöglichen.

Gemäß einer besonders bevorzugten Ausführungsform der Erfindung ist es vorgesehen, dass die Querverstellbarkeit mindestens +/- 300 mm beträgt.

Eine derartige Querverstellbarkeit hat sich in der Praxis als ausreichend erwiesen, um unterschiedliche Prüflinge zuverlässig mit der Antriebseinheit bzw. mit der ersten und zweiten Abtriebseinheit koppeln zu können.

Nachfolgend wird die Erfindung anhand von in den Figuren dargestellten Ausführungsformen beispielhaft erläutert.

Es zeigen:
- Fig. 1: beispielhaft und schematisch eine mögliche Ausführungsform einer erfindungsgemäßen Antriebseinheit für einen Prüfstand zum Prüfen eines elektrischen Achsantriebsmodulsfür ein Kraftfahrzeug in einer Schnittdarstellung,
- Fig. 2: beispielhaft und schematisch die Antriebseinheit der Fig. 1 in einer perspektivischen Ansicht von schräg vorne,
- Fig. 3: beispielhaft und schematisch die Antriebseinheit der Fig. 1 in einer perspektivischen Ansicht von schräg hinten,
- Fig. 4: beispielhaft und schematisch eine weitere mögliche Ausführungsform einer erfindungsgemäßen Antriebseinheit,
- Fig. 5: beispielhaft und schematisch eine weitere mögliche Ausführungsform einer erfindungsgemäßen Antriebseinheit,
- Fig. 6: beispielhaft und schematisch eine weitere mögliche Ausführungsform einer erfindungsgemäßen Antriebseinheit,
- Fig. 7: beispielhaft und schematisch eine weitere mögliche Ausführungsform einer erfindungsgemäßen Antriebseinheit und
- Fig. 8: beispielhaft und schematisch eine mögliche Ausführungsform eines erfindungsgemäßen Prüfstands in einer Ansicht von oben.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

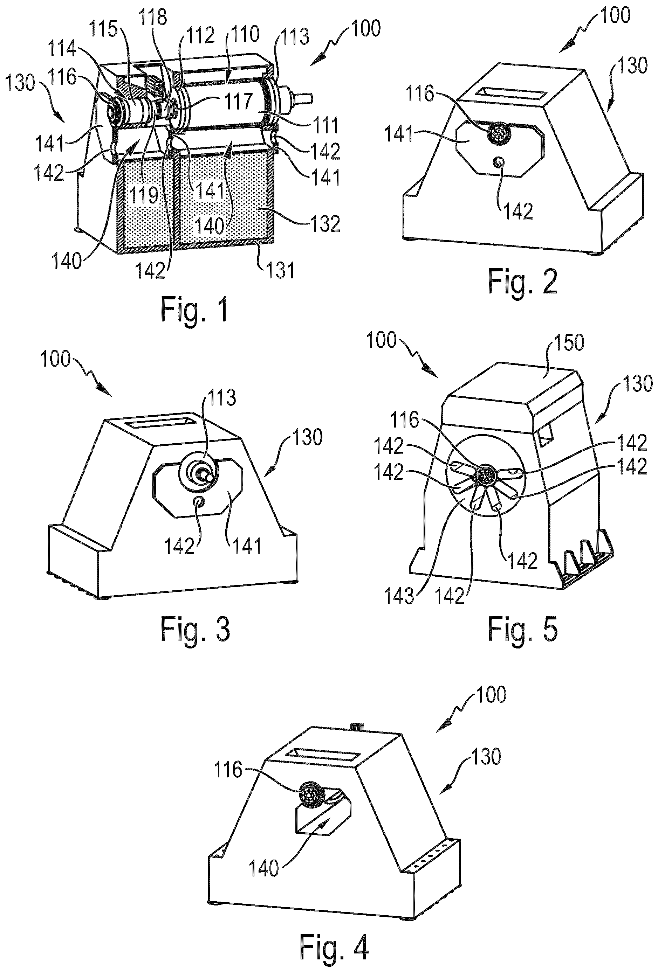

Fig. 1 zeigt beispielhaft und schematisch eine mögliche Ausführungsform einer erfindungsgemäßen Antriebseinheit 100 für einen Prüfstand 200 (nicht dargestellt in Fig. 1) zum Prüfen eines elektrischen Achsantriebsmoduls 240 (ebenfalls nicht dargestellt in Fig. 1) für ein Kraftfahrzeug in einer Schnittdarstellung.

Die Antriebseinheit 100 umfasst einen elektrischen Antriebsmotor 110 und ein Gestell 130, wobei der Antriebsmotor 110 vom Gestell 130 radial eingehaust ist.

Das Gestell 130 besteht beispielsgemäß aus einer metallischen Grundstruktur 131, die in ihrem Inneren einen Mineralguss 132 beinhaltet. Dadurch ist das Gestell 130 äußerst steif und schwingungsdämpfend ausgebildet.

Das Gestell 130 haust den Antriebsmotor 110 radial derart ein, dass ein vorderes Lagerschild 112 und ein hinteres Lagerschild 113 des Antriebsmotors 110 in Anlage mit der metallischen Grundstruktur 131 sind. Die Aufnahmen des Gestells 130 für die Lagerschilde 112, 113 sind beispielsgemäß gegossen und an die konische Außenform des Antriebsmotors 110 angepasst. Dadurch können Schwingungen, die insbesondere bei hohen Drehzahlen im Antriebsmotor 110 auftreten, wirkungsvoll gedämpft werden.

Der Antriebsmotor 110 ist beispielsgemäß dazu ausgebildet, Drehzahlen von mehr als 30000 U/min bereitzustellen.

Wie weiterhin zu sehen ist, ist der Bereich des hinteren Lagerschilds 113 des Antriebsmotors 110 von außerhalb des Gestells 130 zugänglich. Dies ermöglicht auch die Anordnung des Antriebsmotors 110 im Gestell 130 durch axiales Einschieben.

Der Antriebsmotor 110 ist im Gestell 130 so gehalten, dass er über seine Motorwelle 117 im Bereich des vorderen Lagerschilds 112 mit einem Ausgleichselement 118 zum Ausgleich eines geringfügigen radialen Versatzes gekoppelt ist. Das Ausgleichselement 118 wiederum ist mit einem Drehmomentmessflansch 119 gekoppelt. Der Drehmomentmessflansch 119 ist seinerseits mit einer Zwischenwelle 114 gekoppelt, welche in einer Drehlagerung 115 gehalten ist. An ihrem dem Antriebsmotor 110 gegenüberliegenden Ende weist die Zwischenwelle 114 einen Verbindungsflansch 116 auf, über welche sie mittelbar oder unmittelbar eine Eingangswelle 241 (nicht dargestellt in Fig. 1) eines Achsantriebsmoduls 240 (ebenfalls nicht dargestellt in Fig. 1) antreiben kann.

Das Gestell 130 weist zudem eine Öffnung 140 auf, welche dazu ausgebildet ist, eine Abtriebswelle 242, 243 (nicht dargestellt in Fig. 1) des Achsantriebsmoduls 240 parallel zum Antriebsmotor 110 durch das Gestell 130 zu führen.

Dadurch wird es ermöglicht, den Antriebsmotor 110 trieblich mit der Eingangswelle 241 des Achsantriebsmoduls 240 zu verbinden, obwohl die Abtriebswelle 242, 243 des Achsantriebsmoduls 240 radial so nahe an der Eingangswelle 241 liegt, dass die Abtriebswelle 242, 243 nicht am Gestell 130 vorbeigeführt werden kann. Mittels der Öffnung 140 kann die Abtriebswelle 242, 243 nun stattdessen durch das Gestell 130 hindurchgeführt werden.

Wie in Fig. 1 weiterhin zu sehen ist, sind in der Öffnung 140 beispielsgemäß drei Versteifungsplatten 141 angeordnet, welche dazu ausgebildet sind, die Öffnung 140 radial zu verengen und die Steifigkeit der Antriebseinheit 100 zu erhöhen. Wie zu sehen ist, sind die Versteifungsplatten 141 im Wesentlichen scheibenartig ausgebildet und verengen die Öffnung 140 radial bis auf einen schmalen Durchgang 142.

Fig. 2 zeigt beispielhaft und schematisch die Antriebseinheit 100 der Fig. 1 in einer perspektivischen Ansicht von schräg vorne.

Zu sehen ist das Gestell 130, ein Verbindungsflansch 116 der Motorwelle 114 sowie eine Versteifungsplatte 141, welche im Eingangsbereich der Öffnung 140 angeordnet ist. Die Versteifungsplatte 141 weist einen Durchgang 142 auf, welcher die Öffnung 140 radial verengt.

Fig. 3 zeigt beispielhaft und schematisch die Antriebseinheit 100 der Fig. 1 in einer perspektivischen Ansicht von schräg hinten.

Zu sehen ist wiederum das Gestell 130 sowie der hintere Lagerschild 113 des Antriebsmotors 110. Ebenfalls zu sehen ist eine Versteifungsplatte 141, welche im Ausgangsbereich der Öffnung 140 angeordnet ist. Die Versteifungsplatte 141 weist einen Durchgang 142 auf, welcher die Öffnung 140 radial verengt.

Fig. 4 zeigt beispielhaft und schematisch eine weitere mögliche Ausführungsform einer erfindungsgemäßen Antriebseinheit 100.

Die Antriebseinheit 100 der Fig. 4 unterscheidet sich von der Antriebseinheit 100 der Figs. 1 bis 3 durch die Ausbildung der Öffnung 140. Wie zu sehen ist, ist im Ausführungsbeispiel der Fig. 4 die Öffnung 140 nämlich ausschließlich unterhalb und (aus Sicht des Betrachters) rechts des Verbindungsflanschs 116 ausgebildet. Dies beschränkt die Einbaumöglichkeiten eines zu prüfenden Achsantriebsmoduls 240 auf Ausrichtungen, bei denen die Abtriebswellen 242, 243 unterhalb bzw. rechts des Verbindungsflanschs 116 bzw. der Eingangswelle 241 des Achsantriebsmoduls 240 ausgerichtet sind.

Durch die entsprechend kleinere Öffnung 140 kann jedoch auch die Steifigkeit der Antriebseinheit 100 verbessert werden.

Fig. 5 zeigt beispielhaft und schematisch eine weitere mögliche Ausführungsform einer erfindungsgemäßen Antriebseinheit 100.

Die Antriebseinheit 100 der Fig. 5 unterscheidet sich von der Antriebseinheit 100 der Figs. 1 bis 4 durch die Ausbildung der Öffnung 140.

Die Öffnung 140 ist beispielsgemäß kreisrund und umgibt den Verbindungsflansch 116 koaxial. Zudem ist anstelle von Versteifungsplatten 141 ein Trommelkörper 143 vorgesehen, der in der Öffnung 140 angeordnet ist. Der Trommelkörper 143 weist eine Vielzahl von länglichen Durchgängen 142 auf, welche sich axial vollständig durch den Trommelkörper 143 erstrecken. Die Durchgänge 142 sind dabei unterhalb und seitlich des Verbindungsflanschs 116 angeordnet, nicht jedoch oberhalb des Verbindungsflansch 116.

Durch die Vielzahl von Durchgängen 142 ist auch eine Vielzahl von Möglichkeiten gegeben, wie das zu prüfende Achsantriebsmodul 240 im Prüfstand 200 ausgerichtet werden kann.

Auf dem Gestell 130 ist im Ausführungsbeispiel der Fig. 5 zudem ein Klemmenkasten 150 zu sehen, welcher einen Inverter zur Ansteuerung des Antriebsmotors 110 umfasst.

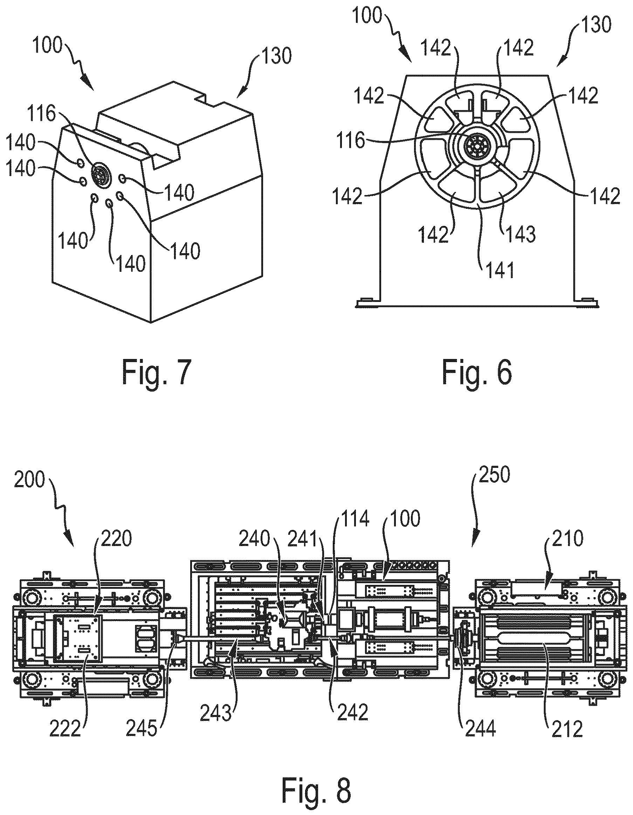

Fig. 6 zeigt beispielhaft und schematisch eine weitere mögliche Ausführungsform einer erfindungsgemäßen Antriebseinheit 100.

Die Antriebseinheit 100 der Fig. 6 unterscheidet sich von der Antriebseinheit 100 der Fig. 5 durch die Ausbildung Trommelkörpers 143. Anstelle von mehreren länglichen Durchgängen 142 wie der Trommelkörper 143 der Fig. 5, der Trommelkörper 143 der Fig. 6 sich zum Außendurchmesser des Trommelkörpers 143 hin vergrößernde Durchgänge 142 auf, welche sich zudem nicht nur unterhalb und seitlich des Verbindungsflanschs 116, sondern auch oberhalb des Verbindungsflanschs 116 erstrecken.

Beispielsgemäß ist der Trommelkörper 143 der Fig. 6 zudem drehbar in der Öffnung 140 gelagert, so dass die Position der Durchgänge verdreht werden kann.

Fig. 7 zeigt beispielhaft und schematisch eine weitere mögliche Ausführungsform einer erfindungsgemäßen Antriebseinheit 100.

Die Antriebseinheit 100 der Fig. 7 unterscheidet sich von den Antriebseinheiten 100 der Figs. 1 bis 4 dadurch, dass sie eine Vielzahl von Öffnungen 140 aufweist. Die Öffnungen 140 sind beispielsgemäß als Bohrungen ausgebildet.

Wie zu sehen ist, sind die Öffnungen 140 der Antriebseinheit 100 der Fig. 7 halbkreisförmig um den Verbindungsflansch 116 angeordnet. Jede Öffnungen 140 kann dabei die Abtriebswelle 242, 243 des Achsantriebsmoduls 240 durch das Gestell 130 führen.

Fig. 8 zeigt beispielhaft und schematisch eine mögliche Ausführungsform eines erfindungsgemäßen Prüfstands 200 in einer Ansicht von oben.

Der Prüfstand 200 umfasst eine erfindungsgemäße Antriebseinheit 100, eine erste Abtriebseinheit 210 und eine zweite Abtriebseinheit 220 sowie eine Prüflingsaufnahme (unterhalb des Achsantriebsmodul 240 und nicht zu sehen in der Darstellung der Fig. 4), in welcher ein zu prüfendes Achsantriebsmodul 240 aufgenommen ist.

Die Antriebseinheit 100 entspricht beispielsgemäß der Antriebseinheit 100 der Figs. 1 bis 3 und umfasst neben dem Antriebsmotor 110 auch das Gestell 130.

Die erste Abtriebseinheit 210 umfasst einen elektrischen Antriebsmotor 210 mit einer Motorwelle und die zweite Abtriebseinheit 220 umfasst ebenfalls einen elektrischen Antriebsmotor 220 mit einer Motorwelle.

Der Prüfstand 240 ist dazu ausgebildet, dass ein elektrisches Achsantriebsmodul 240 derart in der Prüflingsaufnahme aufzunehmen, dass eine Motorwelle 114 der Antriebseinheit 100 mit einer Eingangswelle 241 des Achsantriebsmoduls 100 koppelbar ist.

Der Prüfstand 240 ist weiterhin dazu ausgebildet, dass die Motorwelle des elektrischen Antriebsmotors 212 der ersten Abtriebseinheit 210 mit einer ersten Abtriebswelle 242 des Achsantriebsmoduls 240 koppelbar ist und dass die Motorwelle des elektrischen Antriebsmotors 222 der zweiten Antriebseinheit 240 mit einer zweiten Abtriebswelle 243 des Achsantriebsmoduls 240 koppelbar ist.

Zur Kopplung der Abtriebswellen 242 und 243 mit den Motorwellen der Abtriebseinheiten 210, 220 dienen beispielsgemäß die Radflansche 244 und 245, die im Normalbetrieb des Achsantriebsmoduls 240 dazu vorgesehen sind, Fahrzeugräder aufzunehmen.

Beispielsgemäß umfasst der Prüfstand 200 auch ein nicht näher dargestelltes Schienensystem 250, das eine Längsverschiebung der ersten und der zweiten Abtriebseinheit 210, 220, der Antriebseinheit 100 sowie der Prüflingsaufnahme ermöglicht, um die Abtriebseinheiten 210, 220, die Antriebseinheit 100 und die Prüflingsaufnahme längs und quer zueinander auszurichten.

### Bezugszeichen

- 100: Antriebseinheit

- 110: elektrischer Antriebsmotor
- 111: Motorgehäuse
- 112: vorderes Lagerschild
- 113: hinteres Lagerschild
- 114: Zwischenwelle
- 115: Drehlagerung
- 116: Verbindungsflansch
- 117: Motorwelle des Antriebsmotors
- 118: Ausgleichselement
- 119: Drehmomentmessflansch

- 130: Gestell
- 131: metallische Grundstruktur
- 132: Mineralguss

- 140: Öffnung
- 141: Versteifungsplatte
- 142: Durchgang
- 143: Trommelkörper

- 150: Klemmenkasten

- 200: Prüfstand
- 210: erste Abtriebseinheit
- 212: Antriebsmotor der ersten Abtriebseinheit
- 220: zweite Abtriebseinheit
- 222: Antriebsmotor der zweiten Abtriebseinheit
- 240: Achsantriebsmodul
- 241: Eingangswelle des Achsantriebsmoduls
- 242: erste Abtriebswelle des Achsantriebsmoduls
- 243: zweite Abtriebswelle des Achsantriebsmoduls
- 244: Radflansch
- 245: Radflansch
- 250: Schienensystem

## Patentansprüche

1. Antriebseinheit (100) für einen Prüfstand (220) zum Prüfen eines elektrischen Achsantriebsmoduls (240) für ein Kraftfahrzeug,
umfassend einen elektrischen Antriebsmotor (110) und ein Gestell (130),
wobei der Antriebsmotor (110) vom Gestell (130) radial eingehaust ist und im Gestell (130) so gehalten ist, dass er eine Eingangswelle (241) eines Achsantriebsmoduls (240) antreiben kann,
**dadurch gekennzeichnet, dass** das Gestell (130) mindestens eine Öffnung (140) aufweist, welche dazu ausgebildet ist, eine Abtriebswelle (242, 243) des Achsantriebsmoduls (240) parallel zum Antriebsmotor (110) durch das Gestell (130) zu führen.

2. Antriebseinheit (100) nach Anspruch 1,
**dadurch gekennzeichnet, dass** in der mindestens einen Öffnung (240) mindestens eine Versteifungsplatte (241) angeordnet ist,
wobei die Versteifungsplatte (241) dazu ausgebildet ist, die Öffnung (240) radial zu verengen und eine Steifigkeit der Antriebseinheit (100) zu erhöhen.

3. Antriebseinheit (100) nach Anspruch 2,
**dadurch gekennzeichnet, dass** die mindestens eine Versteifungsplatte (241) prüflingsspezifisch ausgebildet ist und austauschbar an der Antriebseinheit (100) angeordnet ist.

4. Antriebseinheit (100) nach Anspruch 1,
**dadurch gekennzeichnet, dass** in der mindestens einen Öffnung (240) ein Trommelkörper angeordnet ist.

5. Antriebseinheit (100) nach mindestens einem der Ansprüche 1 bis 4,
**dadurch gekennzeichnet, dass** der Prüfstand dazu ausgebildet ist, die Abtriebswelle (242, 243) mit einem radialen Abstand von weniger als 10 cm am Antriebsmotor (110) vorbeizuführen.

6. Antriebseinheit (100) nach mindestens einem der Ansprüche 1 bis 5,
**dadurch gekennzeichnet, dass** in der mindestens einen Öffnung (240) mindestens eine Lagerung für die Abtriebswelle (242, 243) des Achsantriebsmoduls (240) angeordnet ist.

7. Antriebseinheit (100) nach mindestens einem der Ansprüche 1 bis 6,
**dadurch gekennzeichnet, dass** das Gestell (130) eine Vielzahl von Öffnungen (140) aufweist, welche jeweils dazu ausgebildet sind, eine Abtriebswelle (242, 243) des Achsantriebsmoduls (240) parallel zum Antriebsmotor (110) durch das Gestell (130) zu führen.

8. Antriebseinheit (100) nach mindestens einem der Ansprüche 1 bis 7,
**dadurch gekennzeichnet, dass** die Antriebseinheit (100) einen Drehmomentmessflansch aufweist.

9. Antriebseinheit (100) nach mindestens einem der Ansprüche 1 bis 8,
**dadurch gekennzeichnet, dass** das Gestell (130) zumindest teilweise aus einem Mineralguss (132) besteht.

10. Antriebseinheit (100) nach mindestens einem der Ansprüche 1 bis 9,
**dadurch gekennzeichnet, dass** eine Motorwelle (117) des Antriebsmotors (110) mit einer Zwischenwelle (114) gekoppelt ist, wobei die Zwischenwelle (114) in einer Drehlagerung (115) gehalten ist.

11. Prüfstand (200),
umfassend eine Antriebseinheit (100) nach mindestens einem der Ansprüche 1 bis 9, eine erste Abtriebseinheit (210) und eine zweite Abtriebseinheit (220) sowie eine Prüflingsaufnahme (240),
wobei die erste Abtriebseinheit (210) einen ersten elektrischen Antriebsmotor (212) mit einer Motorwelle umfasst,
wobei die zweite Abtriebseinheit (220) einen zweiten elektrischen Antriebsmotor (222) mit einer Motorwelle umfasst,
wobei der Prüfstand (200) dazu ausgebildet ist, ein elektrisches Achsantriebsmodul (240) derart in der Prüflingsaufnahme aufzunehmen,
dass eine Motorwelle (117) eines Antriebsmotors (110) der Antriebseinheit (100) mit einer Eingangswelle (241) des Achsantriebsmoduls (240) koppelbar ist,
dass die Motorwelle des elektrischen Antriebsmotors (210) der ersten Abtriebseinheit (210) mit einer ersten Abtriebswelle (242) des Achsantriebsmoduls (240) koppelbar ist und
dass die Motorwelle des elektrischen Antriebsmotors (222) der zweiten Abtriebseinheit (220) mit einer zweiten Abtriebswelle (243) des Achsantriebsmoduls (240) koppelbar ist.

12. Prüfstand (200) nach Anspruch 11,
**dadurch gekennzeichnet, dass** der Prüfstand (200) weiterhin ein Schienensystem (250) oder ein Gussbett mit Nuten aufweist, um eine Querverstellbarkeit der Antriebseinheit (100) zu ermöglichen und/oder um eine Längsverstellbarkeit der Antriebseinheit (100), der ersten Abtriebseinheit (210) sowie der zweiten Abtriebseinheit (220) zu ermöglichen.
